# EUROPEAN PATENT APPLICATION

(11) **EP 4 844 704 A1**
(43) Date of publication of application: **25.11.2026**
(21) Application number: 25178072.2
(22) Date of filing: 21.05.2025
(51) Int. Cl.: G06V 20/52, G06V 40/10, G06V 40/20

(54) **METHODS, APPARATUSES, SYSTEMS AND COMPUTER PROGRAMS FOR GENERATING ANONYMOUS BEHAVIORAL ANALYTICS FROM HUMAN MOTION AND ENVIRONMENTAL CONTEXT**

(71) Applicant: Yokogawa Electric Corporation, Tokyo 180-8750 (JP)
(72) Inventor: VOORHAAR, Willem Hendrik, 1265 København (DK)
(74) Representative: Schairer, Oliver Michael

(57) **Abstract**

A computer-implemented method, an apparatus, a system and a computer program according to an embodiment are provided. The computer-implemented method comprises determining (110) human motion data using camera data from one or more cameras, wherein the human motion data comprises information on a position of a human (301) in an environment with respect to a coordinate system, and comprises information on an orientation or on a pose of the human (301). Moreover, the method comprises determining (120) region of interest data, wherein the region of interest data comprises information on one or more regions within the environment. Furthermore, the method comprises determining (130) interaction data using the human motion data and the region of interest data, wherein the interaction data comprises information on an interaction of the human (301) with at least one region of interest (302) of the one or more regions. Moreover, the method comprises storing (140) the human motion data, the region of interest data and the interaction data in a database (220) or in a memory for later retrieval, wherein the human motion data and the interaction data to be stored in the database (220) or in the memory do not allow identifying the human (301).

## Description

Embodiments relate to a computer-implemented method, an apparatus, a system and a computer program for generating anonymous behavioral analytics from human motion and environmental context. In particular, embodiments may, e.g., be employed in the field of computer vision and machine learning, and, particularly, for privacy-compliant systems, which analyze human interaction with an environment.

### BACKGROUND

In the field of video understanding, a video is analyzed to answer specific questions. Recently, the techniques to analyze videos have become multi-modal, i.e., they incorporate multiple modalities of data. This includes video captioning, image-to-text applied to still images, video action recognition, pose recognition, object detection, audio text-to-speech, and document retrieval relevant to the video. These multiple modalities of data generated from the video are then combined using machine learning models or large language models to answer complex questions about videos.

In the prior art, systems are known, which are driven by LLMs to understand dynamic scenes, and which are implemented as a video agent. For example, a model may be capable of reasoning over long multi-modal sequences. Moreover, multimodal systems for safety and incident investigation exist in the prior art. Such systems are largely based on object detection.

Furthermore, using human poses for customer analytics (without multiple modalities) has been described in the prior art. For example, US 2024/0320306 A1 discloses concepts for anonymous re-identification and, in particular, discloses systems, apparatuses, methods and computer programs for performing anonymous re-identification and concepts for training a machine-learning model to be used in anonymous re-identification. In this field, concepts for entry-exit matching are provided, wherein each of a plurality of re-identification codes represents a person being recorded by at least one camera when entering or exiting at least a section of the transportation system. Moreover, concepts for re-identification exist, wherein transformed re-identification codes are matched to obtain tuples of transformed re-identification codes, and wherein one or more sequences of locations of the transformed re-identification codes of the tuples are determined.

Other systems refer to behavioral data comprising movement and gaze data, as an important source to understand how people perceive and interact with their environment, and refers to visualizations of behavioral data in desktop-based virtual environments and in an immersive context. Mixed-reality approaches for the analysis of human movement data in situ exist, as well as methods for exploring movement data in relation to surrounding regions of interest, such as objects or furniture. Concepts relate to visualizing human poses in 3D using augmented reality, and analyzing 3D motion data in-situ. Moreover, methods for analyzing human motion data are available. Furthermore, concepts for automated detection of a moving area of interest exist, such as a ball, in a video stream of filed sports with a common object of interest encompassing a plurality of players and the object of interest.

However, some of the existing methods, which use only 2D information, cannot accurately estimate the absolute position of detected objects or persons. Moreover, many existing methods require storing video data. This has drawbacks, as it requires storage, costs, bandwidth, and as it affects privacy. In this context, existing methods using 3D human motion require long-term storage of human motion data, which is problematic for privacy reasons. Finally, existing methods fail to capture the interaction between humans and their environment effectively, and instead mainly focus on the motion of humans.

### SUMMARY

A computer-implemented method according to an embodiment is provided. The method comprises determining human motion data using camera data from one or more cameras, wherein the human motion data comprises information on a position of a human in an environment with respect to a coordinate system, and comprises information on an orientation or on a pose of the human. Moreover, the method comprises determining region of interest data, wherein the region of interest data comprises information on one or more regions within the environment. Furthermore, the method comprises determining interaction data using the human motion data and the region of interest data, wherein the interaction data comprises information on an interaction of the human with at least one region of interest of the one or more regions. Moreover, the method comprises storing the human motion data, the region of interest data and the interaction data in a database or in a memory for later retrieval, wherein the human motion data and the interaction data to be stored in the database or in the memory do not allow identifying the human.

Embodiments provide automatic determination of interactions of humans with regions of interest, while preserving compliance with privacy rules. For this purpose, data that is output or stored is anonymized. Storing the data in an anonymized form allows to store data essentially indefinitely without violating privacy rules. Therefore, in embodiments, all stored data may, e.g., be fully anonymized and does not contain identifying features of persons. This may relax the requirements on obtaining consent and allow for long-term storage.

To preserve privacy, embodiments do not require storing video data, and video data can be processed on-site. This reduces bandwidth, fulfils privacy requirements, and saves storage.

Embodiments may, e.g., implement a system producing human motion data in absolute coordinates. In embodiments, regions of interest are determined. Positional relations between humans and regions of interest may, e.g., anonymously by captured.

Moreover, embodiments may, e.g., provide a database for storing this information, and methods for querying the database for analyzing purposes.

In embodiments, the positional relation between human motion data, e.g., 3D poses, and objects in the scene may, e.g., be employed to determine, how a person is interacting with an environment. The ability to understand interaction between humans and the environment may, e.g., be further enhanced by additional context information, which may be gathered from human motion data and which may then be anonymized. This data can be analyzed later, for example, for generating a report, for anomaly detection, for customer analytics, or for security or incident investigation.

When determining whether a human interacts with a region of interest, a pose of the human may be analyzed, as, for example, body orientation or head orientation towards the region of interest may increase the likelihood of an interaction of the human with the region of interest. On the other hand, if the human is located far from the region of interest, an interaction with the region of interest is less likely. The distance between the human and the region of interest therefore also provides an indication on whether or not the human interacts with the region of interest. Thus, according to an embodiment, the method may, e.g., comprise determining the at least one region of interest the human is interacting with by determining a distance between the position of the human and the at least one region of interest and by analyzing the pose or the orientation of the human. Some embodiments may, e.g., determine 3D positions of persons and objects. This allows a more precise understanding of human actions compared to systems like those that e.g. only rely on 2D information. It may, e.g., also allow a better understanding of the positional relations between objects and persons.

Obtaining a reliable indication on whether or not the human interacts with a region of interest may require taking statistical information into account. When in the past, a particular motion, position pose or orientation has been observed when the human was interacting with a region of interest, it is likely that a similar movement, position, pose or orientation will also indicate an interaction with the region of interest at a future point-in-time. Therefore, in an embodiment, the method may, e.g., comprise determining the at least one region of interest the human is interacting with by employing a statistical model using a motion and/or the position of the human and using the pose or the orientation of the human for interference.

Data being characteristic for a human, for example, a characteristic movement or a pose of the human may be helpful to determine whether the human interacts with a region of interest. On the other hand, storing characteristic data, at least for a longer time, may raise privacy issues. Thus, in an embodiment, the method may, e.g., comprise determining characteristic data, wherein the characteristic data allows to identify the human; determining the interaction data using the characteristic data; anonymizing the characteristic data to obtain anonymized data that does not allow identifying the human, and storing the anonymized data and the interaction data in the database or in the memory.

In an embodiment, the characteristic data may, e.g., comprise data relating to a body shape or a gait pattern or a characteristic movement or a pose of the human. Such data may allow to identify a particular person. As this may raise privacy concerns, an embodiment may, e.g., comprise modifying the data relating to the body shape or the gait pattern or the characteristic movement, so that the human can no longer be identified from the characteristic data.

In an embodiment, the characteristic data may, e.g., comprise at least one of additional information on a property or a state or a behavior of the human in the environment, information on biometric properties of the human, information that the human belongs to a particular group of humans, information on an anomalous behavior or an anomalous state of the human. This data provides additional information on a scene, but on the other hand may again raise privacy concerns. Therefore, said characteristic data may, e.g., be anonymized, so that the human can no longer be identified from the characteristic data.

Re-identification of humans is an important task, when humans shall be tracked or re-identified when reappearing in a scene. On the other hand, re-identification is usually conducted by analyzing characteristic properties, what again may raise privacy issues. Therefore, according to an embodiment, the method may, e.g., comprise determining a re-identification code from the camera data or a portion thereof, the characteristic data comprising the re-identification code, and transforming the re-identification code using a transformation functionality to obtain a transformed (anonymized) re-identification code, wherein the transformation functionality may, e.g., be configured to transform the re-identification code such that, if the re-identification code is similar to a further re-identification code according to a similarity metric, the transformed re-identification code may, e.g., be similar to a further transformed re-identification code being a transformed version of the further re-identification code.

E.g., to comply with privacy requirements, in an embodiment, the method may, e.g., comprise discarding the camera data after determining the human motion data and the interaction data, wherein the camera data may, e.g., not be stored in the database or in the memory. This avoid that camera data characterizing a human may be stored indefinitely and secures privacy rights of the human.

According to an embodiment, the method may, e.g., comprise determining, using the camera data, how the human is interacting with the at least one region of interest by automatically analyzing a behavior of the human with respect to the at least one region of interest. For example, by classifying a behavior of the human, it is not only possible to determine that a human interacts with a region of interest, but also how the human interacts with a human of interest.

Not only interactions between a human and a region may be of interest. In another embodiment, determining the interaction data may, e.g., comprise determining that an interaction between the human and one or more other humans occurs using the camera data, and determining how the human and the one more other humans are interacting by automatically analyzing the behavior of the human and of the one more other humans.

In an embodiment, the human motion data to be stored in the database or in the memory may, e.g., comprise a time series relating to a position or a motion or an orientation or a pose of the human at different points in time. Storing and analyzing a time series not only allows to analyze a particular, frozen scene at a certain point-in-time, but also allows to analyze a movement of the human that occurs over a period of time. For example, by analyzing positions of the human over a time period it can be determined with increased certainty whether a human moves towards a region of interest or whether the human moves away from a region of interest. This, inter alia, allows to better determine whether or not a human interacts with a region of interest.

Particular information may be useful for later analysis and should therefore be stored. According to an embodiment, the region of interest data to be stored in the database or in the memory may, e.g., comprise a name or a description or a size or a shape of a region of interest of the one or more regions, or may, e.g., comprise a relation of the region of interest to other regions of interest. In an embodiment, the interaction data to be stored in the database may, e.g., comprise information on a time span when an interaction occurred, or information on a probability for that an interaction occurred, or further information on the kind of interaction that occurred. According to an embodiment, determining the region of interest data may, e.g., comprise one or more of: Using a CAD drawing or a vision-language-model or a manual specification to define a space in the environment for identifying a region of interest of the one or more regions. Using measurements in the environment to identify the region of interest. Identifying a marker placed in the environment to identify an object of interest and to identify the region of interest comprising the object. Employing a machine learning model to identify the region of interest using the camera data or further sensor data. Manually resizing or moving the region of interest to obtain an updated region of interest.

In addition, it may also be useful to determine and store additional metadata to obtain a better understanding when analyzing a scene later on. Therefore, in an embodiment, the method may, e.g., comprise determining environmental metadata comprising information on a property of the environment. The method may, e.g., comprise storing the environmental metadata in the database or in the memory. According to an embodiment, the method may, e.g., comprise determining object metadata comprising information on an object in the environment. The method may, e.g., comprise storing the object metadata in the database or in the memory.

Report generation may support automatic monitoring of a scene. For example, at regular intervals or when an extraordinary event occurs, a report may automatically be generated. Thus, according to an embodiment, the method may, e.g., comprise automatically generating one or more reports on one or more actions performed by the human in the environment during a specific time period. Moreover, the method may, e.g., comprise outputting the one or more reports or storing the one or more reports in the database. In particular embodiments, positional relations between objects may, e.g., be determined to provide additional context information for report generation. In embodiments, reports may, for example, provide a large amount of other context information for a wide variety of usages. Data may, for example, be analyzed to provide business intelligence after recording, without requiring studies to be designed in advance.

Storing anonymized information in a database allows to analyze a scene later on without potentially violating privacy rules, instead of having to monitor a scene in real-time. Therefore, in an embodiment, the human motion data, the region of interest data and the interaction data may, e.g., be stored in the database. The method may, e.g., comprise querying the database to obtain anonymized information on at least one of the human motion data, the region of interest data and the interaction data being stored in the database. Moreover, the method may, e.g., comprise outputting the anonymized information or storing the anonymized information in the database. According to an embodiment, the method may, e.g., comprise querying the database to obtain aggregated information on interactions that have occurred between the user and the at least one region of interest within a certain time duration or within a monitoring period. The aggregated information on the interactions may, e.g., comprise information on a number of the interactions that have occurred, or may, e.g., comprise a list of the interactions that have occurred, or may, e.g., comprise an analysis of a behavior of the human that may, e.g., be automatically generated based on the interactions that have occurred. Moreover, the method may, e.g., comprise outputting the aggregated information or storing the aggregated information in the database.

Moreover, an apparatus according to an embodiment is provided. The apparatus is configured for determining human motion data using camera data from one or more cameras, wherein the human motion data comprises information on a position of a human in an environment with respect to a coordinate system, and comprises information on an orientation or on a pose of the human. Moreover, the apparatus is configured for determining region of interest data, wherein the region of interest data comprises information on one or more regions within the environment. Furthermore, the apparatus is configured for determining interaction data using the human motion data and the region of interest data, wherein the interaction data comprises information on an interaction of the human with at least one region of interest of the one or more regions. Moreover, the apparatus is configured for storing the human motion data, the region of interest data and the interaction data in a database or in a memory for later retrieval, wherein the human motion data and the interaction data to be stored in the database or in the memory do not allow identifying the human.

Furthermore, a system according to an embodiment is provided. The system comprises one or more cameras configured for providing camera data. Moreover, the system comprises the above-described apparatus. The apparatus is configured for determining the human motion data and the interaction data using the camera data from the one or more cameras.

Moreover, a computer program according to an embodiment is provided. The computer program is configured for implementing one of the above-described methods when being executed on a computer or signal processor.

### BRIEF DESCRIPTION OF THE FIGURES

In the following, embodiments are described in more detail with reference to the figures, in which:
- Fig. 1: illustrates a method for determining human motion data, region of interest data and interaction data and for storing anonymized data derived therefrom according to an embodiment.
- Fig. 2: illustrates an apparatus for determining human motion data, region of interest data and interaction data and for storing anonymized data derived therefrom according to an embodiment.
- Fig. 3: illustrates a system according to an embodiment, wherein the system comprises one or more cameras for providing camera data and an apparatus according to an embodiment for determining human motion data, region of interest data and interaction data and for storing anonymized data derived therefrom.
- Fig. 4: illustrates an example with three tables and their table entries of a relational database according to an embodiment.

### DETAILED DESCRIPTION OF THE FIGURES

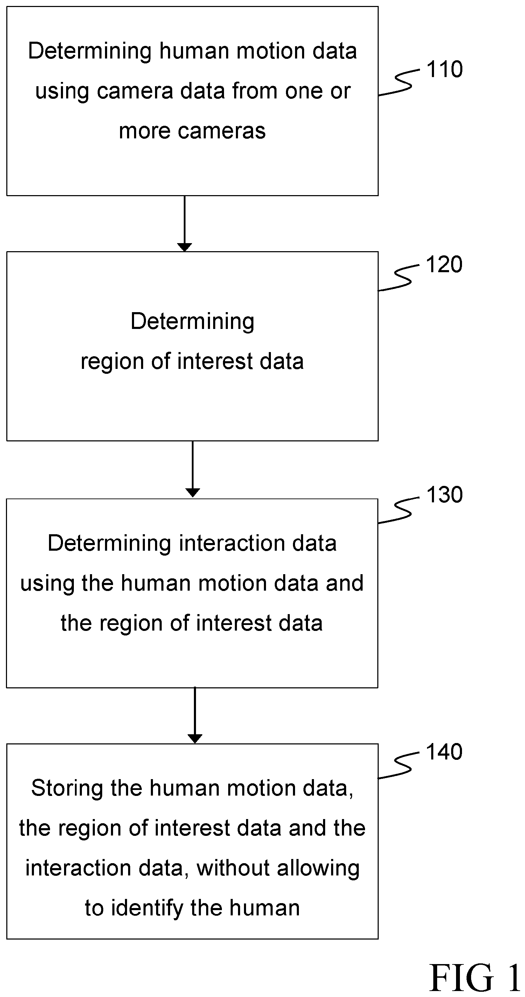

Fig. 1 illustrates a computer-implemented method according to an embodiment.

The method comprises determining 110 human motion data using camera data from one or more cameras, wherein the human motion data comprises information on a position of a human in an environment with respect to a coordinate system, and comprises information on an orientation or on a pose of the human.

Moreover, the method comprises determining 120 region of interest data, wherein the region of interest data comprises information on one or more regions within the environment.

Furthermore, the method comprises determining 130 interaction data using the human motion data and the region of interest data, wherein the interaction data comprises information on an interaction of the human with at least one region of interest of the one or more regions.

Moreover, the method comprises storing 140 the human motion data, the region of interest data and the interaction data in a database or in a memory for later retrieval, wherein the human motion data and the interaction data to be stored in the database or in the memory do not allow identifying the human.

Moreover, an apparatus according to an embodiment is provided. The apparatus is configured for determining human motion data using camera data from one or more cameras, wherein the human motion data comprises information on a position of a human in an environment with respect to a coordinate system, and comprises information on an orientation or on a pose of the human. Moreover, the apparatus is configured for determining region of interest data, wherein the region of interest data comprises information on one or more regions within the environment. Furthermore, the apparatus is configured for determining interaction data using the human motion data and the region of interest data, wherein the interaction data comprises information on an interaction of the human with at least one region of interest of the one or more regions. Moreover, the apparatus is configured for storing the human motion data, the region of interest data and the interaction data in a database or in a memory for later retrieval, wherein the human motion data and the interaction data to be stored in the database or in the memory do not allow identifying the human.

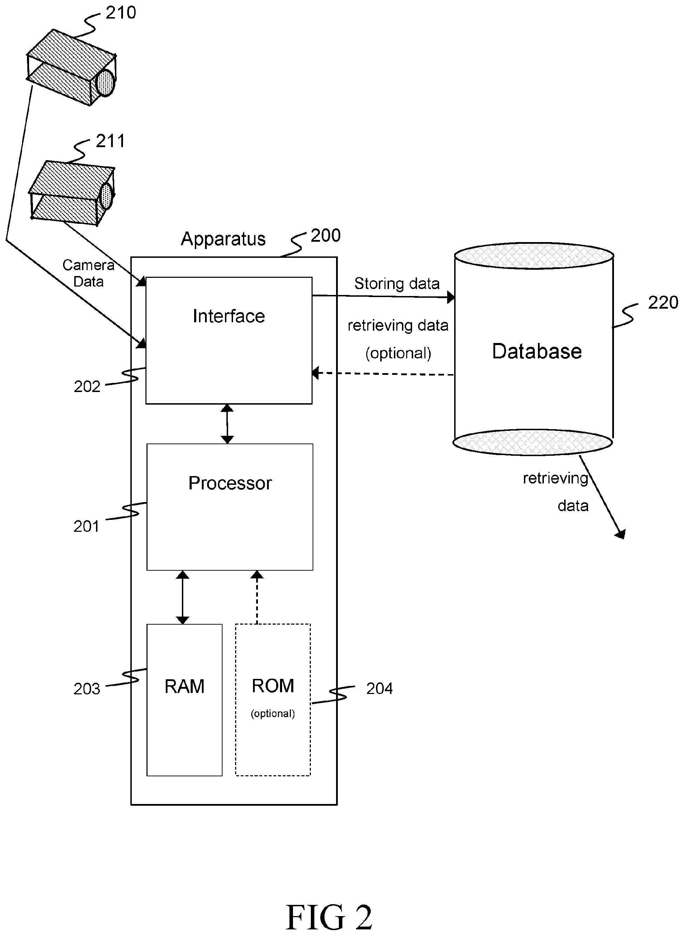

Fig. 2 illustrates an apparatus 200 according to a particular embodiment. The apparatus may, e.g., comprise one or more of: a processor 201, one or more interfaces 202 for data reception and data transmission a random-access memory (RAM) 203, and, optionally, a read-only memory (ROM) 204. The apparatus 200 is configured to interact with one or more cameras (camera 210 and optionally camera 211), which provide camera data to one of the one or more interfaces 202 of the apparatus 200. The apparatus may, e.g., store anonymized data in a database 220.

In an embodiment, a computer program for implementing the above-described method may, e.g., be stored in the RAM 203. In such an embodiment, the computer program may, e.g., be (continuously) updated by software updates to adapt implementation details of the computer program. In another embodiment, the computer program may, e.g., completely or partially stored in the ROM 204. Those software portions that are stored in the ROM 204 are then not changeable, e.g., by a software update, but such a solution exhibits the advantage that the software code is not susceptible or at least less susceptible to unintentional code modifications or intentional code attacks.

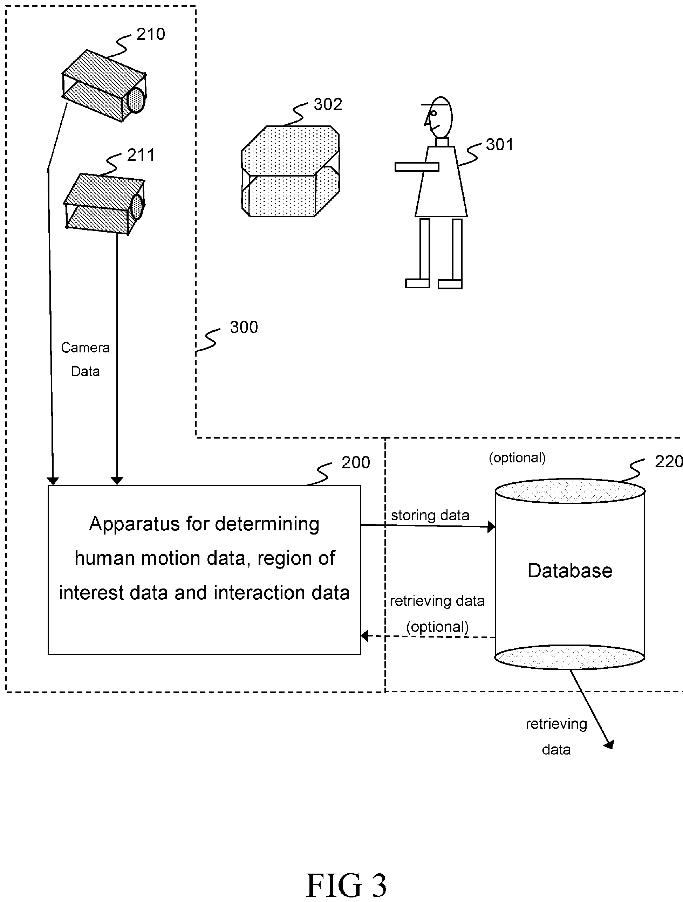

Fig. 3 illustrates a system 300 according to an embodiment.

The system comprises 300 one or more cameras (camera 210 and optionally camera 211), which are configured for providing camera data. The one or more cameras 210, 211 may record a human 301 and a region of interest 302.

Moreover, the system 300 comprises the above-described apparatus 200 for determining human motion data, region of interest data and interaction data and for storing anonymized data derived therefrom. The apparatus 200 is configured for determining the human motion data and the interaction data using the camera data from the one or more cameras 210, 211.

In a particular embodiment, the system of Fig. 2 may, e.g., furthermore comprise a database 220. The apparatus 200 may, e.g., be configured for storing the human motion data, the region of interest data and the interaction data in the database 220 for later retrieval, wherein the human motion data and the interaction data to be stored in the database 220 do not allow identifying the human.

Moreover, a computer program according to an embodiment is provided. The computer program is configured for implementing one of the above-described methods when being executed on a computer or signal processor.

In the following, aspects of particular embodiments are described.

At first generating human motion data according to particular embodiments is described.

It should be noted that the human motion data may, e.g., be expressed with reference to absolute coordinates. Correspondingly, one may, e.g., refer to the human motion data as "absolute human motion data".

For example, particular coordinate values of a two-dimensional coordinate system or of a three-dimensional coordinate system may, e.g., be used to specify a position of the human in an environment.

In other embodiments a coordinate system of even higher dimensionality may, e.g., be employed. For example, a six-dimensional coordinate system may, e.g., be employed, wherein the first three coordinate values may specify a 3D-position of the human, and the other three coordinate values may, e.g., specify a velocity of a motion of the human with respect to three coordinate axes. Or, for example, a nine-dimensional coordinate system may, e.g., be employed, wherein three of the coordinate values specify a 3D-position of the human in the environment, wherein three further coordinate values specify a velocity with respect to the three axes of the coordinate system, and wherein another three coordinate values specify an acceleration of the human with respect to the three axes of the coordinate system.

When considering non-overlapping views, for example, multiple rooms, each non-overlapping view, e.g., each room may, for example, have its coordinate system independent from the other coordinate systems for the other views/rooms. Or, in another embodiment, a unified coordinate system may be employed to establish relative locations of cameras in different rooms. For example, when a CAD drawing of an entire building is available, a unified coordinate system may be employed for the multiple rooms of the building.

Regarding the coordinate system, in an embodiment, the coordinate system may, e.g., be a Cartesian coordinate system.

In an embodiment, pixel coordinates of a camera or camera coordinates of a camera may, e.g., be employed, where x, y may be parallel to the pixel space of the camera, and where the z-axis may encode the distance from the camera. It may be taken into account that in such an embodiment, the distance / z-axis information has a much higher degree of uncertainty than the x, y coordinate information.

Other embodiments realize other combinations of different coordinate values.

Instead of expressing the position of the human using three-dimensions, it may, e.g., be sufficient to express the position of the human using two coordinate values. For example, it may, e.g., be sufficient to express the position of the human for example only in a particular plane of the environment, for example, by neglecting height information, or, for example, by not determining height information at all. E.g., 2D observations from a camera may be projected onto a plane, if no depth information is available. According to a particular embodiment, only the x- and y-coordinates may, e.g., be specified in a Cartesian coordinate system.

In another embodiment, the coordinate system may, e.g., be a spherical coordinate system / a polar coordinate system. For example, a position of the human in an spherical coordinate system may, for example, be expressed by an azimuth angle, an elevation angle and a radius. In a 2D spherical coordinate system, e.g., only an azimuth angle and a radius may, e.g., be specified.

The position of the human may, e.g., be determined using the camera data from one or more cameras. For example, camera data from two or more cameras being positioned at well-determined positions may, e.g., be employed to determine a position of the human or of objects in the environment.

Or, different images from a single, moving camera may, e.g., be employed to determine a positon of the human by triangulation assuming that the different camera positions of the moving camera are known, under the assumption that the human or the object, the position of which being determined, are not moving when the different images are taken.

In other embodiments, another technique for determining the position of the human or of objects in the environment may, e.g., be employed. For example, positions for a plurality of points (for example, particular non-moving objects in the environment) may, e.g., be known. An image of the camera data may, e.g., be analyzed, for example, using image recognition techniques. When it is determined that the human (or an object of interest) is located at such a point or close to such a point, the position of the human (or of the object of interest) can be estimated to be the same as or close to the position of the respective point. For such an approach, camera data from a single camera may, e.g., be sufficient, while camera data from two or more cameras may, e.g., achieve a refined position estimation.

In some embodiments, a velocity of a movement of the human may, e.g., be determined from different positions of the human at different points in time. In particular embodiments, an acceleration of a movement of the human may, e.g., be determined from different velocities of the human at different points in time.

In the following, human pose estimation according to particular embodiments is described.

A human pose estimation may, for example, be represented as a mesh (for example, as a mesh provided by the SMPL technology, or, for example, by a keypoint cloud, or, for example, by parameters of human kinematic model, or, for example, by any other collection of data from which quantitative aspects of a human pose can be inferred (e.g., an embedding produced by a machine learning model).

For example, according to an embodiment, a mesh is generated using SMPL (Skinned Multi-Person Linear) is a mesh being formed by vertices and faces, which provides a geometry of a body of the human and represents shapes and poses of the human. In particular, an SMPL mesh comprises a large number of vertices being represented in 3D-coordinates, which represent the body and the pose of the human.

In another embodiment, a keypoint cloud is generated to represent the body of the human body and its motion, using a sparse set of keypoints. Often, keypoints represent important anatomical positions. Keypoints may, e.g., be represented by 3D-coordinates or 2D-coordinates and allow motion capture and pose estimation.

In a further embodiment, a human kinematic model is generated to represent a body of the human and its motion, wherein the human kinematic model constitutes a mathematical representation comprising a plurality of segments representing portions of the human body and a plurality of joints which connect the segments. In addition, the human kinematic model may, e.g., model constraints on the joints from the human anatomy, and, optionally, forces of tendons and muscles may, e.g., be estimated by the model.

In embodiments, an absolute human pose estimate is generated, wherein an absolute human pose estimate refers to a human pose estimate for which the position and orientation are known relative to a reference point in a physical scene. In addition, the coordinate system may, for example, be metric, e.g., one unit of coordinates corresponds to a physical distance unit, for example, expressed in meters, or, for example, expressed in centimeters. Usually, but not necessarily, the reference coordinate system may, e.g., be configured, such that the floor plane is defined by (*x, y,* z) where z, may, e.g., be z = 0.

The human pose estimation of the human in the environment may, e.g., in some embodiments be, generated using the camera data from the one or more cameras. While employing camera data obtained from a single camera may, e.g., be sufficient to obtain the human pose estimation, employing two or more cameras may, e.g., enhance the quality of the human pose estimation. Thus, according to a particular embodiment, more than one camera may, e.g., be employed to obtain the camera data. In embodiments, the absolute human pose estimates can be produced in a variety of ways, some of which are presented in the following:
For example, a multi-view calibrated camera setup may, e.g., be employed, wherein each camera is equipped with a 2D pose estimation algorithm. A second apparatus or module may, e.g., integrate the information from the multiple cameras to obtain a 3D pose estimate. For example, calibrated cameras may, e.g., be employed, and absolute coordinates may, e.g., be used to conduct the human pose estimate.

Or, for example, a single camera apparatus may, e.g., be employed combined with a model producing relative (e.g., not absolute) 3D human pose estimates, which can then later be turned into absolute poses. Or, for example, a model may, e.g., be used that directly produces absolute 3D human poses. The model may, for example, be a machine learning model / artificial intelligence model. For example, a neural network may, e.g., be employed. The neural network may, e.g., be a deep neural network, e.g., comprising a plurality of layers. The neural network may, for example, comprise at least one of a fully-connected layer, a convolutional layer, a self-attention layer and a recurrent layer. Alternative neural network architectures such as GCN (graph convolutional neural network), state space models and (vision) transformer architectures In other embodiments the model may be a statistical model which is based on a mathematical framework that has been manually designed, that exhibits a stochastic nature, and that expresses relationships between variables/parameters. A statistical model is not necessarily machine trained.

Moreover, according to embodiments, one or more additional sensors may, e.g., be employed to generate the (absolute) human pose estimates. For example, one or more time-of-flight sensors or LIDAR (Light Detection and Ranging) may, e.g., be employed. E.g., a time-of-flight sensor may, e.g., be employed for distance determination to portions of the human's body or for 3D-imaging from which further details may, e.g., be obtained. Similarly laser pulses of LIDAR may, e.g., be used for distance determination to portions of the human's body.

Furthermore, in particular embodiments, one or more additional machine learning models may, e.g., be employed, such as a depth estimation network. Such machine learning may be implemented as a neural network, e.g., a deep neural network, for example, comprising at least one of a fully-connected layer, a convolutional layer, a self-attention layer and a recurrent layer.

In general, any other human post estimate concepts, which output human poses in 3D in absolute coordinates may also or alternatively be employed.

In embodiments, poses are typically tracked over time using a tracking and filtering approach. Tracking may be employed, e.g., by a tracklet, as there may be multiple people in a scene, and tracking may associate detected poses in multiple frames to the same person. (Statistical) filtering may be useful to improve the temporal coherence of a sequence of poses. Moreover, using pose estimates of adjacent fames allows increasing precision, as it reduces noise and adds context. In particular, multiple frames may be employed to increase accuracy of estimates of a kinematic model.

Real-time embodiments are provided, where such tracking and filtering occurs in real-time. Or, in other embodiments, a kinematic solver, e.g., working offline or at a fixed latency, may, e.g., be employed to achieve a higher accuracy. In embodiments, a final output may, e.g., a time series of 3D human pose data, which may, e.g., be referred to as a "tracklet". Such a tracklet may, e.g., represent a human motion of a single person for a time span. The term "human motion data" may, e.g., refer to one or more such time series / tracklets. Thus, in an embodiment, the human motion data to be stored in the database or in the memory may, e.g., comprise a time series relating to a position or a motion or an orientation or a pose of the human at different points in time.

According to some embodiments, cameras may, e.g., be employed to obtain the camera data, which have non-overlapping views. In such configurations, re-identification concepts may, e.g., be employed to track a person across non-overlapping views. Using one or more video frames from one or more cameras, a re-identification code is computed from features in the image, for each person present in the frame.

For example, a feature extraction technique may, e.g., be employed to obtain the re-identification code. In embodiments, such features that are extracted may, e.g., relate to appearance features and/or gait features and/or body shape features of the human. The extracted features may, for example, be represented by a feature vector. E.g., from such a feature vector, a unique re-identification code may, e.g., be derived. In embodiments, similar feature vectors shall result in similar re-identification codes, and can be compared using a distance function, e.g. cosine similarity or Euclidean distance. In particular embodiments, a hashing function may, e.g., be employed to obtain a Hash-value based re-identification code.

In embodiments, the one or more obtained re-identification codes may, e.g., then be associated with a tracklet. Tracklets with sufficiently similar re-identification codes are likely to belong to the same person, and these tracklets may, e.g., be associated with each other. By this way, a person can be tracked across multiple views, or between entering and exiting the region of space visible to a system of one or more cameras.

Re-identification codes, may, e.g., be employed in a way that anonymity is preserved, and that the re-identification codes cannot be used to identify a person, or cannot be used to track a person across multiple days or different locations.

According to an embodiment, a re-identification code may, e.g., be determined from the camera data or a portion thereof. The re-identification code may, e.g., then be transformed using a transformation functionality to obtain a transformed re-identification code. The transformation functionality may, e.g., be configured to transform the re-identification code such that, if the re-identification code is similar to a further re-identification code according to a similarity metric, the transformed re-identification code may, e.g., be similar to a further transformed re-identification code being a transformed version of the further re-identification code. E.g., the transformed re-identification code may, e.g., be obtained by applying a linear transformation on the re-identification code. For example, the transformed re-identification code may, e.g., be obtained by a transform that is distance preserving or essentially distance preserving. E.g., the transformed identification code may, e.g., be obtained by applying a random rotation, for example, by a applying a random rotation matrix on a vector. The random rotation matrix may, e.g., be generated using a secret seed, e.g., which is discarded to preserve anonymity. E.g. the transformed identification code may be obtained by applying a random projection matrix or a random matrix with orthonormal columns, such that the matrix is an isometry or such that on average it preserves distance within a maximum relative error.

Embodiments may, for example, apply one of the concepts for obtaining an anonymous re-identification code presented in US 2024/0320306 A1, which is fully incorporated by reference. See, in particular claims 1 to 14 of US 2024/0320306 A1, which are incorporated herein by reference. See, also, in particular, paragraphs [0071] to [0075] of US 2024/0320306 A1, which are incorporated herein by reference.

To preserve privacy, in a particular environment, re-identification codes may, e.g., be employed in a way that it is only possible to track a person within one building, but not between different buildings.

However, in other embodiments, particularly in cases where privacy is less of a concern, non-anonymous re-identification codes may, e.g., be employed to track a person across multiple days or locations as well.

In the following, concepts for determining one regions of interest according to particular embodiments are presented.

In embodiments, a region of interest may, e.g., be any region of space, e.g., in an environment. The region of interest may, for example, be a 3D region. In particular embodiments, the region of interest may, for example, be annotated with metadata.

A region of interest can be represented in different ways. For example, primitive regions in space or a union thereof may, e.g., be employed to represent a region of interest. A primitive region may, for example, be a cuboid, a square or a sphere. One or more other primitive regions may also be employed such as, a prism, a cylinder, a cone, a torus, a pyramid, a polyhedron, an ellipsoid. In embodiments, a region of interest may, e.g., be represented by a mesh, which may be formed by vertices, edges and faces to define a 3D-object in an environment. In another embodiment, a region of interest may be defined by a convex hull of a set of points. In a particular embodiment, a region of interest may, e.g., be defined by a collection of Gaussian splats, which comprise a set of points that are defined by a Gaussian function to define a region. In other embodiments, other methods for defining a region in space may, e.g., be employed.

In embodiments, regions of interest shall allow to compute a meaningful distance between a 3D human pose and the object of interest, and shall allow to compute an intersection between a 3D location and the region of interest. It should be noted that a region of interest can be large, and, for example, may represent a part of a room, or can be small, and, for example, may be a small handheld item such as a phone. Regions of interest may, e.g., be either static, such as furniture, or may, e.g., be non-static and may, e.g., be tracked over time, such as a region of interest defined by a tool, a food item, a movable furniture, a laptop, etc.

Regions of interest can be obtained in different ways. In an embodiment, determining the region of interest data may, e.g., comprise one or more of: Using a CAD drawing (Computer-Aided Design drawing) or a vision-language-model or a manual specification to define a space in the environment for identifying a region of interest of the one or more regions. Using measurements in the environment to identify the region of interest. Identifying a marker placed in the environment to identify an object of interest and to identify the region of interest comprising the object. Employing a machine learning model to identify the region of interest using the camera data or further sensor data. Manually resizing or moving the region of interest to obtain an updated region of interest.

For example, by using a CAD drawing of the space in which the 3D pose estimation apparatus is deployed, precise 3D locations can be annotated for regions of interest such as furniture, doorways, shopping aisles, static devices (lab equipment, computers, security keypad, etc.).

Or, for example, a manual annotation may, e.g., be employed, wherein a region of space is defined in terms of primitives (such as by cuboids, spheres, or other primitives, see the above examples). E.g., after defining the primitive, the coordinates and dimensions of the primitive may, e.g., be adjusted to overlap with the region of interest.

In embodiments, obtaining a correct size and position of a region of interest may, e.g., be achieved by conducting one or more measurements in the physical scene Another approach would be to view the projected region of interest overlapped on top of one or more camera feeds. Moving or resizing the region of interest in 3D would then alter the projected view on the camera feeds.

Another concept to determine the location of the region of interest would be to employ fiducial markers, such as ArUco markers or QR codes, which may be placed in the scene. Subsequently the fiducial markers may, e.g., be located by the camera system to determine/register positions of objects. In addition to encoding the location of objects, the fiducial marker can also store data, such as the ID of an ArUco marker or the content of a QR code. This data can encode metadata about the object, and multiple markers in the scene can be effectively distinguished.

Or, in another embodiment, a machine learning model may, e.g., be employed to automatically annotate objects or regions of interest using camera data from one or more cameras. Additional sensors, e.g., LIDAR may also be used. The machine learning model may, e.g., be a neural network, for example, a deep neural network, e.g., a neural network as described above.

Determining a region of interest, for example, by employing a machine learning model, may, e.g., be performed semi-automatically using a prompting-based mechanism. This can be done fully automatically by using a vision-language-model (VLM) to describe a scene in textual format and identify potentially interesting objects or regions. In an embodiment, a prompt-based detection or segmentation model (for example, Grounding DINO, or Segment anything) may be employed to detect a region of interest.

In a particular embodiment, the region of interest may, for example, be determined in 2D. For example, camera data from only a single (e.g., statically placed) camera may be employed, wherein depth information may not be available.

In other embodiments, two or more cameras at different locations are available for obtaining the camera data. Camera data from multiple camera angles may be employed to obtain 3D camera data. E.g., a 3D object detection model may, e.g., be employed to determine a location a region of interest. Or, a (e.g., single) moving camera may be employed to obtain image data from different locations/different camera angles to obtain 3D camera data.

According to an embodiment, machine learning models may e.g. be employed to estimate a 3D mesh of an object using one or more views of the object, which may be used to automatically obtain a more fine-grained region of interest. In another embodiment, machine learning models may be employed to estimate Gaussian splats of the region of interest.

In an embodiment, a machine learning model may be configured to perform inference at multiple time instances to enable tracking of non-static objects, or to improve precision for static objects.

In the following, concepts for inferring anonymous data, which capture an interaction of a person and the environment based on human motion data according to particular embodiments are described. In embodiments, using the camera data, it is determined, how the human is interacting with the at least one region of interest by automatically analyzing behavior of the human with respect to the at least one region of interest.

In this context, it should be noted that privacy issues may arise. As already described, sequences of human poses contain privacy-sensitive identifying information, such as a body shape (e.g., bone lengths, a height of a person), gait patterns and characteristic movements. While storing this data for short terms likely satisfies grounds of legitimate interest for the applications, storing data over the long term is often problematic. To address this issue, some embodiments extract a range of useful information from the human pose data, and may then discard any privacy-sensitive data. Privacy-sensitive data is thus only used for processing purposes, which constitutes grounds for legitimate interest.

Human pose data can be used to infer which regions of interest a person is interacting with. For example, in an embodiment, human pose data may be employed to determine a possible interaction of the human with a region of interest, if this person is sufficiently near the region of interest. Thus, according to an embodiment, the method may, e.g., comprise determining the at least one region of interest the human is interacting with by determining a distance between the position of the human and the at least one region of interest and by analyzing the pose or the orientation of the human. For example, the distance to each region of interest in a scene (e.g., within a sufficient distance) may be recorded for each person. The distance to a region of interest may, e.g., then be employed as anonymous information associated with the person.

Alternatively or additionally, a statistical model can be used to infer whether or not a person is interacting with a region of interest in the scene. Such a model may, e.g., employ a pose and/or a motion of the person as a basis for its inference. Thus, determining the at least one region of interest the human is interacting with by employing a statistical model may be conducted using the motion and/or the position of the human and using the pose or the orientation of the human for interference. Taking the pose and/or motion into account for determining a possible interaction results in a more reliable determination and has more statistical power than the position of a human alone. For example, the gaze of a person may, e.g., be estimated from pose data, and a model may infer that if a person is looking at a region of interest, then they are more likely to be interacting with it. The statistical model may output a probability of interaction for every region of interest. Alternatively or additionally, the statistical model may output the one or more regions of interest that the person is most likely to interact with, or the one or more regions of interest for which the estimated probability of interaction is above a specified threshold.

In an embodiment, a statistical model may be manually specified. In another embodiment, the statistical model may be a model (e.g., automatically) learned from data. The statistical model may, e.g., be implemented as a neural network. In another embodiment, another arbitrary architecture different from a neural network may, e.g., be employed to implement the statistical model. For example, the statistical model may, e.g., be implemented by a linear model, by a decision tree, by a Support Vector Machine (SVM), by a gradient boosted trees or by a random forest, etc.

According to an embodiment, the statistical model may, e.g., be a machine learning model. Training data for the machine learning model may be manually annotated, for example, from video data, or may be automatically annotated, for example, by employing a an auxiliary model. For example, the output of a vision-language model on video or camera frames may provide sufficient information for determining whether or not a person is interacting with a region. As such methods are computationally expensive and may potentially exhibit privacy issues, they may, e.g., only be employed for producing training data.

Training data may, e.g., be determined by manually or automatically collecting real data. Alternatively or additionally, training data for a statistical model or for a machine learning model may, for example, be obtained by artificial data generation, such as by conducting data augmentation, by synthetic data generation or by conducting oversampling of existing data.

It is noted that training data may also be employed for improving purely statistical models, which are not implemented as machine-learning models, e.g., for testing and verification purposes.

The above explanations, options and alternatives for implementing a statistical model or for implementing a machine learning model may, e.g., apply to one, some or all statistical models and machine learning models referred to in this description.

Some embodiments may determine the manner in which a person is interacting with the region of interest. For example, the pose of a person may be related to an activity typically carried out with the region of interest. For example, sitting at a desk in a typical position of a person typing most likely indicates the person is using the computer situated at that desk. Another example would be that a person grabbing something from a shelf most likely has one or more arms outstretched and overlapping with the shelf's region of interest.

In an embodiment, a model may perform action recognition based on motion data to classify the action a person is doing such as 'typing', 'washing hands', or 'running'. These actions or likelihoods of actions can then be used by a second model to infer what region of interest a person is interacting with.

In addition to identifying which region of interest a person is interacting with, in an embodiment, a statistical model may use human motion data to classify how a person is interacting with the region of interest.

In embodiments, a statistical model may employ human motion data, for example, to be able to detect one or more of the following situations or to differentiate between two or more of the following situations: A person coming very close to a shelf, possibly even touching it, without otherwise meaningfully interacting with the shelf. A person looking at a shelf. Grabbing an item from the shelf, inspecting it, and putting it back. Grabbing an item from a shelf and putting it in a shopping cart. As another example, a statistical model may, e.g., use human motion data to distinguish between a person walking through an open door, or opening a closed door before passing through it. Moreover, another example would be a (e.g., statistical) model that is configured to classify whether a person is washing hands correctly in addition to determining whether or not a person is using a hand washing station. Or, the model may differentiate between using a sink for cleaning an item, or for using it to wash hands. It is noted that these are only examples and various other situations may also be detected or differentiated.

In some embodiments, interaction between humans may, e.g., be captured. Thus, in an embodiment, determining the interaction data may, e.g., comprise determining that an interaction between the human and one or more other humans occurs using the camera data, and determining how the human and the one more other humans are interacting by automatically analyzing a behavior of the human and of the one more other humans.

Examples for such interactions that may be determined may, e.g., comprise determining an action to detect conflicts and aggression (e.g., determined by action recognition), detecting people that have to squeeze past each other or having sufficient space, detecting when people are having a conversation, detecting when people are looking at each other, detecting when people are handing each other items, etc. In embodiments, advanced action recognition models may classify different types of interactions between persons into discrete actions

In an embodiment, at least one of additional information on a property or a state or a behavior of the human in the environment, information on biometric properties of the human, information that the human belongs to a particular group of humans, information on an anomalous behavior or an anomalous state of the human may be determined. Said characteristic data may, e.g., be anonymized, so that the human can no longer be identified from the characteristic data.

Examples of anonymized information that may be inferred based on human motion data may comprise: The position of the person projected on the floor plane or a fixed height above the floor plane. Actions inferred by an action recognition routine based on single poses or motion data. A walking speed, e.g., of a person. Whether or not the person has an item in its hands, for example, a phone or a shopping cart. Biometric data useful for determining a customer type without being specific enough to identify the person, for example an age group (e.g., an age in the range of 1-10, 10-20, 20-40, 40-60 or 60+), a gender, or a height group (e.g., grouped in steps of 10 cm). A fall detection or other anomalous poses and behavior. An intoxication detection based on gait. Aggressive or suspicious behavior detection based on actions, gait, and poses. (E.g., anonymous) re-identification codes, see above.

Thus, in particular embodiments, characteristic data is determined, wherein the characteristic data allows to identify the human; the interaction data is determined using the characteristic data; the characteristic data is anonymized to obtain anonymized data that does not allow identifying the human.

According to an embodiment, the characteristic data may, e.g., comprise data relating to a body shape or a gait pattern or a characteristic movement or a pose of the human. Anonymizing the characteristic data may, e.g., comprise modifying the data relating to the body shape or the gait pattern or the characteristic movement so that the human can no longer be identified from the characteristic data.

In an embodiment, the method may, e.g., comprise discarding the camera data after determining the human motion data and the interaction data, wherein the camera data may, e.g., not be stored in the database or in the memory.

In the following, aspects relating to the database for storing the derived information according to particular embodiments are described. Any kind of database software can be used to store the information presented in embodiments.

For example, a relational database system (RDBMS) may be employed for storing the obtained data. In such a relational database system data is stored in tables comprising rows and columns. Query languages well-known in the art exist, such as SQL (Structured Query Language) to retrieve information by querying the relational database. In a particular embodiment, a first table may represent all persons detected in an environment. The different columns may of such a table may relate to different detected properties of the person, or time series data of detected properties that change over time such as motion data. According to an embodiment, another table may represent the regions of interest. The different columns of such a table may relate to different properties of the region of interest.

Or, in another embodiment, an object-oriented database may, e.g., be employed. In object-oriented databases (OODB), data is represented as objects with attributes. Functions operate on the data. Employing an object-oriented database may be particularly suitable. In an embodiment, a human may be represented by an object of the OODB. Each of the regions of interest may be represented by another object of the OODB. In a particular embodiment, a first class of the OODB may represent a person and a second class may represent a region of interest. Whenever a person or a region of interest is detected and stored in the OODB, a respective class (either person or region of interest) may be instantiated.

Or, in a further embodiment, the database may be a multidimensional database (MDDB) may, e.g., be employed, which is particularly suitable for handling data with a plurality of dimensions. In a particular embodiment, properties of the multidimensional database may beneficially be exploited, by organizing different determined properties of a person and/or different determined properties of a region of interest in a corresponding multidimensional dataset that is stored in the MDDB. In particular, an MDDB may be particularly suitable for storing a three dimensional shape of a region of interest.

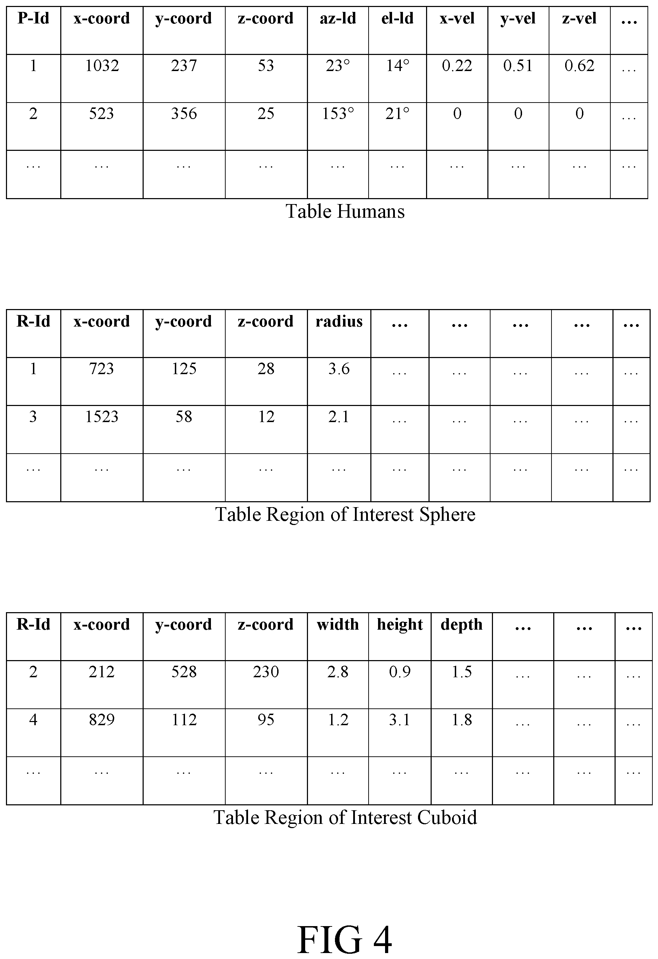

Fig. 4 illustrates an example with three tables and their table entries of a relational database according to an embodiment. The first table, "Table Humans", comprises information on the detected humans in a scene. The first column of the table may, e.g., comprise a person identifier (P-Id). The next three columns may, e.g., comprise x-, y- and z-coordinate values of the position, where the respective person is located. Further columns may, e.g., define a look direction of the person expressed by an azimuth angle (az-ld) and by an elevation angle (el-ld). Another three elements may, e.g., comprise information on a velocity of a movement of the person in x-direction (x-vel), y-direction (y-vel) and z-direction (z-vel), e.g., expressed in m/s with respect to the respective coordinate. In the example of Fig. 4, person 1 is moving, but person 2 is not moving (all x-vel, y-vel, and z-vel values of person 2 are zero). The "Table Humans" may, e.g., comprise a plurality of further columns with additional information on the respective human.

The next two tables of Fig. 4 comprise information on regions of interest. Both tables may, e.g., comprise a region of interest ID (P-ID) which identify the respective region of interest, and three columns defining a location of a base point of the region of interest, e.g., identified by its x-, y-, and z-coordinate values (x-coord, y-coord, z-coord). For the "Table Region of Interest Sphere", the base point may, e.g., define the position of the center of the sphere. In said table, a column "radius" may, e.g., define the radius of the sphere. For the "Table Region of Interest Cuboid", the base point may, for example, define that corner point of the cuboid having a smallest distance to the center point (0, 0, 0) of the coordinate system. Further columns may, e.g., define a width, a height and a depth of the respective cuboid. The "Table Region of Interest Cuboid" may, e.g., comprise further columns, e.g., columns that define yaw-, pitch-, roll-angles for defining rotations of the cuboid, for example, with respect to the coordinate axes. Both the "Table Region of Interest Sphere" and the "Table Region of Interest Cuboid" may, e.g., comprise a plurality of further columns with additional information on the regions of interest.

One or more other tables of the RDBMS may, e.g., provide other information, in particular on the interaction data.

In the following further details of data that may be stored in the database according to particular embodiments is provided:
According to an embodiment, the region of interest data to be stored in the database or in the memory may, e.g., comprise a name or a description or a size or a shape of a region of interest of the one or more regions, or may, e.g., comprise a relation of the region of interest to other regions of interest. For example, the data that is stored in the database may, e.g., comprise anonymized human motion data, region of interest data, and interaction data.

Anonymized human motion data may, e.g., comprise one or more or all of the data described above, and, e.g., optionally, a unique ID for a tracklet.

Data relating to regions of interest may, e.g., comprise static attributes, for example, size, shape, etc., information position and optionally orientation (both, e.g., as static point or as time series), and/or metadata including names, descriptions, relations to other regions of interest.

Interaction data may relate to interactions between humans and regions of interest. These interactions can be stored as a series of time spans, indicating when the interaction happened. In an embodiment, a time series of probability values, indicating the probability of interaction happening, can be stored in the database. According to another embodiment, a time series of distances between the human and the region of interest, may be stored in the database. Thus, the interaction data to be stored in the database may, e.g., comprise information on a time span when an interaction occurred, or information on a probability for that an interaction occurred, or further information on the kind of interaction that occurred.

Moreover, in an embodiment, interaction data to be stored in the database may, e.g., comprise additional columns, which add context to the interaction, such as (probabilities of) actions and classification of how the person interacted with the region of interest.

Furthermore, according to an embodiment, interaction data to be stored in the database may, e.g., comprise information on interactions between humans. Such information may, e.g., comprise one or more of the following: Distances between persons. Time spans or time series of probabilities of interactions. Probability information indicating the probability that one person is looking at another person. Action recognition information classifying interaction between the persons, either as a discrete class, as a vector of probabilities, or a time series of probabilities.

Moreover, in particular, if the database is a relational database, the data to be stored in the database may, e.g., comprise relations to other tables in the database, for example, an identifier (ID) in an inventory management system.

In the database, spatiotemporal data such as positions of humans may, e.g., be indexed using a spatial or spatiotemporal index. For example, in a particular embodiment, using a 4D k-d tree, space and time may be partitioned efficiently, and it is possible to efficiently retrieve all objects in the database that intersect a certain region of space during a given time interval, or conversely, retrieve all time intervals in which object satisfying a certain query intersect a certain region of space.

In the following, concepts for querying the database for analytics purposes according to embodiments are described.

According to an embodiment, the database may, e.g., be queried to obtain anonymized information on at least one of the human motion data, the region of interest data and the interaction data being stored in the database.

In an embodiment, the database may be queried to obtain aggregated information on interactions that have occurred between the user and the at least one region of interest within a certain time duration or within a monitoring period. The aggregated information on the interactions may, e.g., comprise information on a number of the interactions that have occurred, or may, e.g., comprise a list of the interactions that have occurred, or may, e.g., comprise an analysis of a behavior of the human that may, e.g., be automatically generated based on the interactions that have occurred.

The data stored in the database can then be queried in multiple ways. For example, a data analyst may query the database. On the other hand, querying the database may, e.g., be conducted by executing program code of a program that itself queries the database.

In embodiments, the database may be queried (e.g., by a program or, e.g., by a data analyst) for conducting data analysis based on the stored data.

For example, querying the database may be conducted to find all the instances where a person was interacting with a region.

Or, querying the database may, e.g., be conducted to find a distribution of interaction times of a region (such as an amount of time spent using a certain device, or time spent looking at a shopping aisle).

In another example, the database may, e.g., be queried to find the distribution of times between a person interacting with two different regions (e.g., time between entering the room and going to a specific aisle in a shop).

In a further example, querying the database may be conducted to find all ordered pairs of a person interacting with one region and then with any other region, together with the time in between. This can be used to establish a weighted directed acyclic graph (DAG) where each node is a region of interest, and each edge is weighted with travel time between the two regions. For example, this may be useful for analytics, for example, in a shop, as patterns from customers can be learned and used to optimize locations and topology of the shop to accommodate typical customer patterns.

According to a further example, the database may be queried to find compliance violations. For example, if washing hands is mandatory before using a specific lab device, then all instances may be searched, where a person was using said device without first having washed hands (interacting with the sink region).

In another example, the interaction between people is analyzed, and the database may be queried to find a distribution of number of people interacting with the same region at the same time, Example can be to find customers at the same aisle in a shop, or to estimate a length of a queue for a bathroom. Another example would be a query to obtain statistics about queue lengths for e.g. a bathroom or a checkout counter.

A further example for a database query would be to find choke points in a room, e.g., find the point in a hallway where the most number of people are at the same time. Or to find points where people are most likely to bump into each other. A further example would be to query the database to determine, for a specific shopping aisle, whether people are most likely to reach for objects in top, middle or bottom shelves.

In further examples, the database may be queried to find the most common paths between regions, together with the time it takes to traverse the path; or to find the most common actions performed in a region; or to find the most common objects carried between regions; or to find the most common objects used in a region.

In other examples, the database would be queried to obtain a heatmap of the most common positions in a room, or to obtain a heatmap of average movement speed in a room, or to obtain a heatmap of anomalous behavior, e.g., a person running in a shopping center, slipping, or falling. E.g., the heatmap provides a data visualization by representing the respective information in a matrix or in a two-dimensional space using color gradients. In an embodiment, the obtained information may, e.g., be displayed in a dashboard, or used to generate a report. Or, the obtained information may, e.g., be integrated into a larger system, such as a digital twin of a building.

In a particular embodiment the database system may, for example, be implemented to support or more or all of the above. In other embodiments, other analyses may, e.g., be conducted.

In embodiments, a high degree of flexibility may, e.g., be provided that allows data analysts or programs querying the database to gain insight from the data after the data has been gathered, instead of requiring specific experiments to be set up a priori.

In the following, further embodiments which provide additional context are now described.

Embodiments can be enriched by a large variety of additional context and metadata, such that more information to be extracted from the data, which enables a wide variety of use cases. In an embodiment, any of the methods that require image or video data, the context may, e.g., be gathered in real-time. Afterwards, the image is discarded to save storage and guarantee anonymity.

According to an embodiment, one or more image-to-text models may, e.g., be employed to add descriptions of video frames or specific persons (an example for such a description could be: "A person wearing a hat is standing in a shopping aisle"). The added descriptions may, e.g., then be analyzed, e.g., using one or more large language models (LLMs) to gain additional context. For example, by this, information about the appearance of persons, or actions they are performing may be captured, that is difficult to capture otherwise. A discriminatory network (e.g., an LLM) can be used to censor information that would allow to uniquely identify a person to retain anonymity in practice.

In another embodiment, one or more video-to-text models may, e.g., be employed to describe dynamic scenes. Since these models are computationally very expensive, such video-to-text models might need additional hardware to process.

According to an embodiment, object metadata comprising information on an object in the environment may, e.g., be determined.

In an embodiment, biometric data may be estimated. Biometric data may, for example, comprise a height or an age estimate, a gender estimate or an ethnicity estimate. Estimation may, e.g., be conducted by employing one or more image-to-text models, by specialized models, or by using human motion data as described above.

In an embodiment, environmental metadata comprising information on a property of the environment may, e.g., be determined. For example, the environmental metadata may comprise environmental sensor data, for example, relating to temperature, light, air quality, etc. This allows an analyst or a program to analyze how environmental factors affect behavior.

According to embodiments, other sensors may be employed, e.g. sensors related to the state of a building, for example, door/window sensors, alarm settings, and/or motion/presence sensors. This is especially useful for security and compliance considerations, for example, focusing on analyzing behavior of persons during a security violation.

Particular embodiments can be integrated into a digital twin, e.g., a virtual model or replica of a physical object, system or process, which mirrors its counterpart in a real-world environment, and which thus allows simulation, monitoring and analysis.

In the following, report generation according to particular embodiments is described.

According to an embodiment, one or more reports on one or more actions performed by the human in the environment during a specific time period may automatically be generated.

Embodiments allow for automatically generating reports of actions performed in a scene/environment, for example, a room, e.g., during a specific time period. Reports may, for example, comprise information on times when persons enter/exit rooms, or a start and/or a stop of performing certain actions, or a start and/or a stop of an interaction with a certain region of interest. Presenting this information in text format may, e.g., be useful for compliance, manual editing by human operators, and manual inspection by human operators. For example, such information may be presented in addition to or instead of data dashboards summarizing the data in the database.

In addition to using re-identification features to track persons across larger areas and time frames, a particular embodiment may, e.g., link re-identification features to a specific person, for example to an employee, patient, or inmate, to add meaningful IDs in reports (for example: 'John Doe did X at time Y' instead of 'Person 1234 did X at time Y'). In other embodiments, however, this may, e.g., be avoided due to privacy considerations.

Report generation may, for example, be used in a patient ward. A classification can be used to distinguish patients from staff and visitors. All the times when e.g., a nurse enters the ward and performs a certain action, for example, checking readings, administering medicine, talking to patient, reports can be automatically registered. The movements or mobility of a patient can be tracked. For example, every time the patient gets up from the bed, shifts position, goes to the toilet, leaves the room, walks around inside the room, etc. a report may track such movements. It may, e.g., be possible that such a report can then be further filled out by a human operator. Providing a skeleton of the report saves time for a human operator, and provides precise times for all actions.

Moreover, actions of unauthorized persons may, e.g., be recorded by the report. For example, in a prison, a precise record can be kept of who was in which room at any point. A complete record may, e.g., be kept of important actions, such as a warden letting inmates in and out of rooms, or when inmates are given food.

Or, in a manufacturing or laboratory facility reports may, e.g., be employed for surveilling compliance: E.g., a record may, e.g., be kept of all actions performed at the facility. For example, a report may, e.g., comprise: "Person A used handwashing station at time X; Person A used lab equipment 1 at time Y".

Although some aspects have been described in the context of a method, in particular, a computer-implement method, it is clear that these aspects described in the context of a method step also represent a description of a corresponding block or item or feature of a corresponding apparatus. Analogously, for aspects that have been described in the context of an apparatus, it is clear that these aspects also represent a description of the corresponding method, where a block or device corresponds to a method step or a feature of a method step.

Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments can be implemented in hardware or in software or at least partially in hardware or at least partially in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments comprise a data carrier having electronically readable control signals, which are capable of cooperating with a programmable computer system, such that one of the methods described herein is performed.

Generally, embodiments can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitory.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The methods described herein may be performed using a hardware apparatus, or using a computer, or using a combination of a hardware apparatus and a computer.

The above described embodiments are merely illustrative. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. A computer-implemented method, wherein the method comprises:
determining (110) human motion data using camera data from one or more cameras (210, 211), wherein the human motion data comprises information on a position of a human (301) in an environment with respect to a coordinate system, and comprises information on an orientation or on a pose of the human (301),
determining (120) region of interest data, wherein the region of interest data comprises information on one or more regions within the environment,
determining (130) interaction data using the human motion data and the region of interest data, wherein the interaction data comprises information on an interaction of the human (301) with at least one region of interest (302) of the one or more regions,
storing (140) the human motion data, the region of interest data and the interaction data in a database (220) or in a memory for later retrieval, wherein the human motion data and the interaction data to be stored in the database (220) or in the memory do not allow identifying the human (301).

2. The method according to claim 1,
wherein the method comprises determining the at least one region of interest (302) the human (301) is interacting with by determining a distance between the position of the human (301) and the at least one region of interest (302) and by analyzing the pose or the orientation of the human (301); and/or
wherein the method comprises determining the at least one region of interest (302) the human (301) is interacting with by employing a statistical model using a motion and/or the position of the human (301) and using the pose or the orientation of the human (301) for interference.

3. The method according to claim 1 or 2,
wherein the method comprises determining characteristic data, wherein the characteristic data allows to identify the human (301); determining the interaction data using the characteristic data; anonymizing the characteristic data to obtain anonymized data that does not allow identifying the human (301); and storing the anonymized data and the interaction data in the database (220) or in the memory.

4. The method according to claim 3,
wherein the characteristic data comprises data relating to a body shape or a gait pattern or a characteristic movement or a pose of the human (301),
wherein anonymizing the characteristic data comprises modifying the data relating to the body shape or the gait pattern or the characteristic movement so that the human (301) can no longer be identified from the characteristic data.

5. The method according to claim 3 and 4,
wherein the characteristic data comprises at least one of additional information on a property or a state or a behavior of the human (301) in the environment, information on biometric properties of the human (301), information that the human (301) belongs to a particular group of humans, information on an anomalous behavior or an anomalous state of the human (301); wherein said characteristic data is anonymized, so that the human (301) can no longer be identified from the characteristic data.

6. The method according to one of claims 3 to 5,
wherein the method comprises determining a re-identification code from the camera data or a portion thereof, the characteristic data comprising the re-identification code,
wherein anonymizing the characteristic data comprises transforming the re-identification code using a transformation functionality to obtain a transformed re-identification code, wherein the transformation functionality is to transform the re-identification code such that, if the re-identification code is similar to a further re-identification code according to a similarity metric, the transformed re-identification code is similar to a further transformed re-identification code being a transformed version of the further re-identification code.

7. The method according to one of the preceding claims,
wherein, the method comprises discarding the camera data after determining the human motion data and the interaction data, wherein the camera data is not stored in the database (220) or in the memory.

8. The method according to one of the preceding claims,
wherein the method comprises determining, using the camera data, how the human (301) is interacting with the at least one region of interest (302) by automatically analyzing a behavior of the human (301) with respect to the at least one region of interest (302); and/or
wherein determining the interaction data comprises determining that an interaction between the human (301) and one or more other humans occurs using the camera data, and determining how the human (301) and the one more other humans are interacting by automatically analyzing a behavior of the human (301) and of the one more other humans.

9. The method according to one of the preceding claims,
wherein the human motion data to be stored in the database (220) or in the memory comprises a time series relating to a position or a motion or an orientation or a pose of the human (301) at different points in time, and/or
wherein the region of interest data to be stored in the database (220) or in the memory comprises a name or a description or a size or a shape of a region of interest (302) of the one or more regions, or comprises a relation of the region of interest (302) to other regions of interest, and/or
wherein the interaction data to be stored in the database (220) comprises information on a time span when an interaction occurred, or information on a probability for that an interaction occurred, or further information on the kind of interaction that occurred.

10. The method according to one of the preceding claims,
wherein determining the region of interest data comprises one or more of: using a CAD drawing or a vision-language-model or a manual specification to define a space in the environment for identifying a region of interest (302) of the one or more regions,
using measurements in the environment to identify the region of interest (302),
identifying a marker placed in the environment to identify an object of interest and to identify the region of interest (302) comprising the object,
employing a machine learning model to identify the region of interest (302) using the camera data or further sensor data,
manually resizing or moving the region of interest (302) to obtain an updated region of interest.

11. The method according to one of the preceding claims,
wherein the method comprises determining environmental metadata comprising information on a property of the environment, or the method comprises determining object metadata comprising information on an object in the environment,
wherein the method comprises storing the environmental metadata or the object metadata in the database (220) or in the memory.

12. The method according to one of the preceding claims,
wherein the method comprises automatically generating one or more reports on one or more actions performed by the human (301) in the environment during a specific time period, wherein the method comprises outputting the one or more reports or storing the one or more reports in the database (220); and/or
wherein the human motion data, the region of interest data and the interaction data are stored in the database (220), and wherein the method comprises querying the database (220) to obtain anonymized information on at least one of the human motion data, the region of interest data and the interaction data being stored in the database (220), wherein the method comprises outputting the anonymized information or storing the anonymized information in the database (220); and/or wherein the human motion data, the region of interest data and the interaction data are stored in the database (220), wherein the method comprises querying the database (220) to obtain aggregated information on interactions that have occurred between the user and the at least one region of interest (302) within a certain time duration or within a monitoring period; wherein the aggregated information on the interactions comprises information on a number of the interactions that have occurred, or comprises a list of the interactions that have occurred, or comprises an analysis of a behavior of the human (301) that is automatically generated based on the interactions that have occurred, and wherein the method comprises outputting the aggregated information or storing the aggregated information in the database (220).

13. An apparatus (200), wherein the apparatus (200) is configured for:
determining human motion data using camera data from one or more cameras (210, 211), wherein the human motion data comprises information on a position of a human (301) in an environment with respect to a coordinate system, and comprises information on an orientation or on a pose of the human (301),
determining region of interest data, wherein the region of interest data comprises information on one or more regions within the environment,
determining interaction data using the human motion data and the region of interest data, wherein the interaction data comprises information on an interaction of the human (301) with at least one region of interest (302) of the one or more regions,
storing the human motion data, the region of interest data and the interaction data in a database (220) or in a memory for later retrieval, wherein the human motion data and the interaction data to be stored in the database (220) or in the memory do not allow identifying the human (301).

14. A system (300) comprising:
one or more cameras (210, 211) configured for providing camera data, and the apparatus (200) according to claim 13, wherein the apparatus (200) is configured for determining the human motion data and the interaction data using the camera data from the one or more cameras (210, 211).

15. A computer program for implementing the method of one of claims 1 to 12 when being executed on a computer or signal processor.
